## Europäisches Patentamt

## European Patent Office

## Office européen des brevets

(19)

(11) Veröffentlichungsnummer: **0 311 060**
**A2**

(12) # EUROPÄISCHE PATENTANMELDUNG

(21) Anmeldenummer: **88116510.4**

(22) Anmeldetag: **05.10.88**

(51) Int. Cl.⁴: **C08L 63/00 , C08G 59/18**

(30) Priorität: **08.10.87 BG 81391/87**

(43) Veröffentlichungstag der Anmeldung:
**12.04.89 Patentblatt 89/15**

(84) Benannte Vertragsstaaten:
**CH DE ES FR GB GR IT LI**

(71) Anmelder: **ENGINEERINGOVO PREDPRIYATIE pri SO "TESHKO MASHINOSTROENE"**

**2400 Radomir(BG)**

(72) Erfinder: **Raina Petkova Maslarska**
**Baykusheva-Strasse, Block 37-B**
**BG-2300 Pernik(BG)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) **Masse zur Herstellung von dekorativen Erzeugnissen.**

(57) Die erfindungsgemäße Masse zur Herstellung von dekorativen Erzeugnissen besteht aus
Diethylentriamin      10 %
Epoxa AP-2 (Diphenylolpropan, Epichlorhydrin und Weichmacher)    40 %
Natriumbicarbonat und/oder Weißzement      40 bis 45 %
Öl-, Temper- oder Aquarellfarbe 1 bis 10 %.

Die Bestandteile werden bei 10 bis 40 °C gemischt. Die so erhaltene Masse ist nach 12stündigem Halten bei 15 bis 45 °C vollständig gebrauchsfertig.

EP 0 311 060 A2

## MASSE ZUR HERSTELLUNG VON DEKORATIVEN ERZEUGNISSEN

Die Erfindung betrifft eine Masse zur Herstellung von dekorativen Erzeugnissen.

Es sind in der Praxis plastische Werkstoffe zur Herstellung von dekorativen Erzeugnissen auf der Basis von synthetischen Harzen bekannt, die durch Brennen während 4 bis 5 Min. bei einer Temperatur von 100°C fixiert werden.

Der Nachteil dieser Massen ist, daß zum Herstellen von dekorativen Erzeugnissen eine Erwärmung bei 100°C während 4 bis 5 Min. notwendig ist (JA-PS 56 40 116).

Der Erfindung liegt die Aufgabe zugrunde, einen plastischen Werkstoff bereitzustellen, wobei dann keine Notwendigkeit besteht, die daraus modellierten Erzeugnisse zu brennen.

Diese Aufgabe wird gelöst durch eine Masse, die in Prozenten ausgedrückt die folgende Zusammensetzung aufweist:

Diethylentriamin 10 % ± 2 %

Epoxa AP-2 (Diphenylolpropan, Epichlorhydrin und Weichmacher) 40 % ± 5 %

Natriumbicarbonat oder Weißzement 40 bis 45 %

und

Öl-, Temper- und/oder Aquarellfarbe 1 bis 10 %.

Die einzelnen Komponenten werden bei 10°C bis 40°C gemischt. Die Masse mit dieser Zusammensetzung ist zur Modellierung von dekorativen Erzeugnissen geeignet.

Ein dekoratives Erzeugnis aus einem Werkstoff mit dieser Zusammensetzung ist nach 12stündigem Halten bei 15 bis 45°C vollständig gebrauchsfähig.

Die Vorteile der Erfindung bestehen darin, daß die aus der Masse geformten Erzeugnisse nicht gebrannt werden müssen, leicht und hart sind, in allen gewünschten Färbungen gefärbt werden können, wasserbeständig sind und Temperaturveränderungen von -40 bis 80°C gut aushalten.

Beispiel 1

Es werden folgende Bestandteile genommen:
Diethylentriamin 10 g
Epoxa AP-2 (Diphenylolpropan, Epichlorhydrin und Weichmacher) 40 g
Natriumbicarbonat 40 g
und
Ölfarbe (Zinnober dunkel) 10 g.
Diese Komponenten werden bei 40°C gemischt. Die Masse ist dann gebrauchsfertig.

Beispiel 2

Es werden
Diethylentriamin 9 g
Epoxa AP-2 (Diphenylolpropan, Epichlorhydrin und Weichmacher) 15 g
Weißzement 45 g
und
Temperfarbe (Titanweiß) 5 g
genommen. Diese Komponenten werden bei 20°C gemischt. Die so erhaltene Masse ist nach 12 Stunden Halten bei 15 bis 45°C vollständig gebrauchsfähig.

## Ansprüche

Masse zur Herstellung von dekorativen Erzeugnissen, dadurch **gekennzeichnet**, daß sie aus
Diethylentriamin 10 ± 2 %
Epoxa AP-2 (Diphenylolpropan, Epichlorhydrin und Weichmacher) 40 ± 5 %
Natriumbicarbonat und/oder Weißzement 40 - 45 %
Öl-, Temper- oder Aquarellfarbe 1 - 10 %
besteht.